# EUROPEAN PATENT APPLICATION

(11) **EP 4 647 411 A1**
(43) Date of publication of application: **12.11.2025**
(21) Application number: 24179609.3
(22) Date of filing: 03.06.2024
(51) Int. Cl.: C04B 30/02, C04B 38/00

(54) **MICROPOROUS COMPOSITE INSULATION COMPOSITION AND USE THEREOF**

(30) Priority: 08.05.2024 US 202463644036 P
(71) Applicant: PRTC NV, 2830 Tisselt (BE)
(72) Inventor: ABDUL-KADER, Oras, 9100 Sint Niklaas (BE); MARECHAL, David, 84170 Monteux (FR); GREGG, William, Maryville, 37801 (US)
(74) Representative: Etex Services NV - Etex IPSC

(57) **Abstract**

The processable microporous insulation material comprises a gelled material in which a microporous powder is loaded. The gelled material is a hydrogel that is based on a polyalkylene oxide, wherein alkylene is C2-C6 alkylene. The microporous powder comprises 0-10% by weight of inorganic fiber, 20-50% by weight of an opacifier and 30-70% by weight of a particulate silica material from the group of pyrogenic silica and precipitated silica, said particulate silica material optionally further comprising alumina, said weight% based on total dry weight of the microporous powder, wherein said microporous powder and/or at least part of said particulate silica material is hydrophobic.

## Description

### FIELD OF THE INVENTION

The invention relates to a processable microporous insulation material comprising a gelled material in which a microporous powder is loaded, which microporous powder comprises an opacifier and pyrogenic silica, wherein said pyrogenic silica is hydrophobic.

The invention also relates to a method of preparation of such processable microporous insulation material.

The invention further relates to the use of said processable microporous insulation material for generating a molded body of predefined shape and for applying insulation on a surface.

### BACKGROUND OF THE INVENTION

Such a processable microporous insulation material is known from US5703147. The said material comprises a combination of 7 ingredients of which 2 are optional. These ingredients are inorganic reinforcement fiber (a), inorganic binder (b), hydrophilic fumed particulate filler (c), fumed particulate insulation material that is rendered hydrophobic (d), polymer (e), setting agent (f) and opacifier (g), the letter being optional.

As specified in the paragraph bridging columns 3 and 4, the polymer (e) and part of the hydrophilic fumed particulate filler (c) are first mixed. This mixture is then added to the inorganic binder, diluted with water, further mixed and combined with the setting agent, so as to gel the inorganic binder. As is explained in column 3 of US5703147, the setting agent for setting the binder may be organic such as starch. However, it is preferably a base stabilized colloidal silica that is used in combination with an acid stabilized colloidal silica as the binder. For this binder, a polymer of ethylene oxide is the polymer of choice, although cellulose ethers and copolymers of vinyl amides and acrylic acids could be used alternatively.

Finally, the ingredients (a), (d) and (g) and part of (c) are mixed into a dry mixture. This mixture is a microporous powder that is added to the gelled inorganic binder. The ingredient (a), which is inorganic fiber, is added in an amount from 10-30wt%, and in one specific composition 18wt%. The ingredient (d), which is the hydrophobic fumed material and especially hydrophobic fumed (or pyrogenic) silica, is added in an amount from 25-50wt%, and in one specific embodiment 33wt%. The ingredient (g), which is opacifier, is added in an amount from 0-20wt% and preferably 10wt%. The total amount of ingredient (c), which is hydrophilic fumed silica, is from 10-20wt%, and preferably 15wt%. It follows that the microporous powder of the preferred composition comprises about 27wt% inorganic fiber, about 58wt% fumed silica (mostly hydrophobic) and about 15wt% opacifier. As explained in column 2, the inorganic fiber does not function primarily as insulation, but provides mechanical strength. It is thereto deemed preferred that the inorganic fiber is a low shot content fiber. One preferred blend of inorganic fibers comprises specialty vitreous (AES) fibers (SF607 = Superwool 607 = SiO2 65%, CaO 29.5%, MgO 5.5%, and AI203<1%), blowing wool (i.e. mineral wool) and E-glass fiber strand (fiber chopped to specified length).

Acid stabilized colloidal silica is commercially available and known per se from US3007878. It is prepared from NaOH-stabilized colloidal silica particles (also known as silica sols) by cation removal using a cation exchange resin. The resulting silica sols are acidic, with silanol (SiOH) groups at the surface and a pH of 2-4. Furthermore, the acidic sol may be cation-coated by treatment with aluminum chloride and heating. may be added to such an acidic sol.

Acid stabilized colloidal silica is a bit of a specialty, as compared to base-stabilized colloidal silica. The reason for using this version as a binder seems to reside therein that the polyethylene oxide and the hydrophilic fumed silica are acidic as well. Apparently, the use of base-stabilized colloidal silica with the polyethylene oxide and hydrophilic fumed silica did not lead to a desired result.

Moreover, the density of the resulting insulation materials is quite low. US5703147 mentions a density that is preferably between 10 and 16 pcf. This corresponds to 160 to 256 g/dm3. Microporous materials with low density have a disadvantage of low mechanical strength. In US5703147, this is solved in that the microporous powder comprises inorganic fiber in large amounts. This does not appear beneficial for thermal conductivity. Moreover, both the use of acid-stabilized colloidal silica and large amounts of inorganic fiber adds to cost, especially because the fiber includes a special alkaline earth silicate fiber known as Superwool^{™} 607, which is a wool and very small diameter (typically 2-3 micron).

### SUMMARY OF THE INVENTION

It is therefore an object of the present invention to provide an improved microporous composite insulation composition, which has better thermal insulation performance at typical operation temperatures above room temperature.

It is a further object to provide a method of applying the said microporous composite insulation material as insulation on or around an object.

It is again a further object to provide a method of preparation of such microporous composite insulation material.

According to a first aspect, the invention provides a processable microporous insulation material comprising a gelled material in which a microporous powder is loaded, wherein the gelled material is a hydrogel that is based on a polyalkylene oxide, wherein alkylene is C2-C6 alkylene, and wherein the microporous powder comprises 0-10% by weight of inorganic fiber, 20-50% by weight of an opacifier and 30-70% by weight of a particulate silica material from the group of pyrogenic silica and precipitated silica, said particulate silica material optionally further comprising alumina, said weight% based on total dry weight of the microporous powder, wherein said microporous powder and/or at least part of said particulate silica material is hydrophobic.

According to a second aspect, the invention provides a method of preparation of a processable microporous insulation material according to the invention, comprising the steps of
- providing a dry mixture of a hydrophilic polymer, a crosslinking polymeric or oligomeric material and preferably an inorganic dispersant;
- adding water or aqueous suspension to generate a hydrogel from the hydrophilic polymer and the crosslinking polymeric or oligomeric material;
- loading a microporous powder into the hydrogel.

According to a third aspect, the invention provides a method of manufacturing a body of microporous insulation material, comprising the steps of providing a processable microporous insulation material of the invention; molding the processable microporous insulation material into a molded body of predefined shape, and optionally drying the molded body.

According to a fourth aspect, the invention provides a method of applying insulation material to a surface, wherein a processable microporous insulation material according to the invention is applied as the insulation material.

According to a fifth aspect, the invention provides an object provided with a body or layer of insulation, wherein said body or layer of insulation is embodied as a microporous insulation material comprising a gelled material in which a microporous powder is loaded, wherein the gelled material is a hydrogel that is based on a polyalkylene oxide, wherein alkylene is C2-C6 alkylene, and wherein the microporous powder comprises 0-10% by weight of inorganic fiber, 20-50% by weight of an opacifier and 30-70% by weight of a particulate silica material from the group of pyrogenic silica and precipitated silica, said particulate silica material optionally further comprising alumina, said weight% based on total dry weight of the microporous powder, wherein said microporous powder and/or at least part of said particulate silica material is hydrophobic.

The invention is based on the insight that a hydrogel based on a polyalkylene oxide provides sufficient structure for a processable microporous insulation material, and that an inorganic binder based on gelation of colloidal silica is not necessary. Beyond that, advantageous thermal conductivity values were obtained in experimental investigations. Higher amounts of opacifier than in the prior art contribute to this reduction of thermal conductivity. The amount of inorganic fiber could be reduced without issues in the mechanical stability of the processable material or that of the resulting material after application to a substrate and drying.

A further beneficial effect is that the density of the microporous material after drying is increased. Whereas the prior art indicated preferred densities in the range of 160-260 g/dm³, densities above 350 g/dm³ were obtained in the invention. Generally, such higher densities enable better mechanical strength. Furthermore, such higher density is deemed beneficial for the thermal conductivity at operation temperatures such as 400°C. For many of the applications of high-performance insulation, especially microporous insulation, this temperature of 400°C is more relevant than room temperature. Examples of such applications include piping for oil and gas, fuel cells and other heating systems, engines, aerospace and the like.

In an embodiment, the polyalkylene oxide is a polyethylene oxide and/or copolymers thereof. Generally, the polyalkylene oxide can have an alkylene chain of C2-C6, thus being polyethylene oxide, polypropylene oxide, polybutylene oxide, polyisobutylene oxide, polypentylene oxide, polyhexylene oxide and copolymers thereof. Good results have been obtained with polyethylene oxide, which appears to match well to silica. Although homocopolymers are preferred, copolymers are not excluded. For instance, block copolymers of polyalkylene oxide are known per se as suitable for forming hydrogels Preferably, the content of such copolymer is less than 25wt%, more preferably less than 10wt%, or even less than 5wt%. The molecular weight (i.e. weight-average molecular mass) of the polyalkylene oxide can be chosen from a broad range. Preferably, it is more than 1.10⁶ g/mol, such as in the range of 1.5.10⁶ to 7.10⁶ g/mol, for instance 2.0.10⁶-5.10⁶ g/mol. Since crosslinking of polyethylene oxide occurs at the end groups, a higher molecular mass leads to a less dense crosslinking and hence to a more flexible hydrogel.

In a further embodiment, the polyalkylene oxide, preferably polyethylene oxide, is crosslinked with a polymeric or oligomeric polyacid. While hydrogels may be formed by way of physical crosslinking (i.e. hydrogen bonding), the formation of a hydrogel with chemical crosslinks is preferred, so as to ensure the stability of the hydrogel during any mixing with further ingredients. A variety of polyacids may be used, provided that these are oligomeric or polymeric so as to enable that the resulting polymer network has sufficient flexibility. It will be understood that a combination of polyacids may be used alternatively.

Good results have been achieved with the use of polyacrylic acid as a crosslinker. The polyacrylic acid may herein be partially esterified for stabilization and to obtain a sufficient distance between (carboxylic) acid groups along the chain. The polyacrylic acid is suitably used in powder form, for instance as a spray-dried polyacrylic acid. It may be a copolymer of acrylic acid, acrylate and further monomers. Examples of spray-dried acrylic polymers, which are redispersible powders are BASF ACRONAL S430P, BASF ACRONAL S629P, DOW DRYCRYL 2903, ELOTEX FLEX 8300, ELOTEX FLEX 8310, ELOTEX FLEX 8320, ELOTEX FX 7000, ELOTEX TITAN 8100 or a mixture thereof. One way of preparing such redispersible powder is known from WO2008059034, which is included herein by reference. It is herein disclosed to form a polyacrylic acid (or acrylate) in the form of a dispersion, emulsion or microemulsion (low viscous) in the presence of a stabilization colloid. The dispersion is then formulated into a powder by addition of a water-soluble polymer and subsequent drying, such as by spray-drying, freeze-drying, fluidized bed drying, drum drying and/or flash drying. Hence, it is preferred to provide the acrylic polymer as a dispersible powder, and more preferably as a dried (such as spray-dried) formulation of a particulate, acrylic polymer or copolymer (latex) with a water-soluble polymer. Examples of such water-soluble polymers include one or several polyvinyl pyrrolidones and/or polyvinyl acetals with a molecular weight of 2,000 to 400,000, fully or partially saponified and/or modified fully or partially saponified polyvinyl alcohols with a degree of hydrolysis of preferably about 70 to 100 mol. %, in particular of about 80 to 98 mol. %, and a Höppler viscosity in 4% aqueous solution of preferably 1 to 100 mPas, in particular of about 3 to 50 mPas (measured at 20° C. in accordance with DIN 53015), as well as melamine formaldehyde sulfonates, naphthaline formaldehyde sulfonates, block copolymerisates of propylene oxide and ethylene oxide, styrene-maleic acid and/or vinyl ether-maleic acid copolymerisates.

In an important embodiment, the hydrogel is free of a silica gel. Best results have obtained with formulations in which no colloidal silica was added or in which the colloidal silica was well stabilized again gelation. Furthermore, it is deemed preferable to add extra water during processing, in other words to dilute the hydrogel upon addition of any colloidal silica. Such extra dilution has been found to lower the thermal conductivity to a level corresponding to the situation without addition of any colloidal silica. Preferably, the colloidal silica is diluted with the water, to which the dry mixture generating the hydrogel is added.

In again a further embodiment, colloidal silica that is functionalized at its surface, typically with a silane, is used. The surface modification does not merely provide stabilization of the colloidal silica due to changes of the pH, but also facilitates dispersion in an aqueous composition and in the hydrogel. Preferably, the silane functionalization is provided with OH-groups. A preferred implementation is functionalization with an epoxy-silane, which results in alkylene-group extending from the surface of the colloidal silica particles, which alkylene groups are provided with two hydroxyl groups.

When applying colloidal silica, use of a neutral, aqueous dispersion is preferred, rather than acid-stabilized or base-stabilized colloidal silica. The amount of colloidal silica added into the processable microporous insulation material is preferably up to 25wt% dry weight, based on dry weight of the material, more preferably up to 20wt% dry weight. It may be for instance 5-15wt%, or 1-8 wt%. Use of a mixture of colloidal silicas as a filler is not excluded. It has been found that the addition of colloidal silica may provide extra high-temperature stability, such as based on weight loss determination after a treatment at a higher temperature, such as 600°C.

Rather than or in addition to colloidal silica, waterglass may be added as a precursor of colloidal silica. The use of waterglass may be beneficial for processing, but will result in formation of some silica gel in the course of processing, and/or afterwards upon drying. Hence, thermal conductivity and high temperature stability are somewhat compromised in comparison to the results wherein the hydrogel is free of any silica gel.

According to the invention, the microporous powder comprises a particulate silica material chosen from pyrogenic silica and precipitated silica, said particulate silica material optionally further comprising alumina. A pure alumina material is not deemed useful or beneficial in the processable microporous insulation material. However, alumina could partially replace the silica. When desiring very good high temperature stability of well above 400°C, pyrogenic silica is preferred. When configured for use up to operation temperatures of around 400°C, precipitated silica may be used. Mixtures of pyrogenic silica and precipitated silica are not excluded. The use of pyrogenic silica is furthermore preferred to obtain minimum thermal conductivity. The amount of particulate silica material is generally in the range of 30-70wt%. It is suitably in the range of 50-65wt% based on the total dry weight of the microporous powder. However, this amount may be reduced by addition of any filler.

According to the invention, at least part of the particulate silica material or the microporous powder is hydrophobic. Preferably, the particulate silica material is rendered hydrophobic. Such may be achieved by treatment of - hydrophilic - particulate silica material with a hydrophobation agent, which is preferably an alkylsilane or (halogen) substituted alkylsilane or siloxane compound. The hydrophobation is preferably performed prior to mixing of the particulate silica material with other ingredients. Hydrophobic pyrogenic silica may also be purchased from suppliers. While in one embodiment all of the particulate silica material is hydrophobic, this is not deemed essential. For instance at least 50% by weight of the particulate silica material may be hydrophobic, preferably at least 70% by weight, more preferably at least 80% by weight. Rather or in addition to the use of hydrophobic particulate silica in the microporous powder, the microporous powder could be hydrophobized as such by treatment with a hydrophobation agent.

Opacifiers for use in microporous powders are known per se, and are for instance silicon carbide, titanium oxide (rutile form), zirconium silicate, magnesium oxide. The use of titanium oxide is deemed preferable in the context of the present invention. The amount of opacifiers is preferably at least 30wt% based on the weight of the microporous powder, and preferably at least 35wt%, such as 35-50wt%, when using titanium oxide. When using silicon carbide, the amount of opacifier is preferably at least 20wt%.

Fibers are deemed not necessary in the present invention, although the addition of fibers is deemed beneficial to ensure sufficient flexibility of the microporous insulation after application and drying. Inorganic fibers are preferred for sake of high temperature stability, if so desired. Otherwise cellulose fibers may be used. As inorganic fibers, fibers with a diameter of at least 5 µm is preferred. Such fibers are distinct from fibers with a smaller diameter such as 2-3 µm, which are also known as wool. Such smaller diameter fibers, as used in the prior art, will have different distribution and less effect on flexibility but more on reinforcement. While glass fibers are not excluded, the use of silica-based fibers, such as fibers comprising at least 75% SiO2 and at least 5% Al₂O₃, such as at least 80% SiO2 and 5-20% Al₂O₃ is preferred. Generally, due to any surface treatment of the fiber material, the particulate silica material and the opacifier typically do not stick to the fiber material. Still, the silica fiber may interact favorably with the hydrophobic particulate silica material during loading and/or drying of the processable material. The amount of fibers is preferably up to 10% by (dry) weight of the microporous powder. Use of at most 5wt% fibers is preferred, as it turns out that an increased amount of fibers results in an increased thermal conductivity and higher degree of shrinkage in a high temperature treatment. In a preferred implementation, the amount of fibers is for instance 1-5 wt%, such as 2-4% by weight and most preferably 2.5-3.5wt% of the microporous powder.

The loading of the microporous powder is preferably in an amount of at least 60wt%, preferably in the range of 70-80wt% based on the total dry weight of ingredients of the processable insulation material.

Preferably, the density of the processable microporous insulation material is at least 300 g/dm³, preferably in the range of 350-500 g/dm³, or even 350-450 g/dm³. Such a density is understood to provide sufficient mechanical stability and beneficial thermal conductivity at 400°C or higher. The density may be tuned by way of way of the load of the microporous powder in the gelled material, as well as the composition of the microporous powder. Furthermore, the generation of the hydrogel may impact the density; i.e. the larger the volume, the smaller the density. This may be optimized by trial and error if so needed and in dependence of preparation scale and equipment. Densities are measured after drying to a humidity level of at most 2%. This is a level of humidity at which no free water is deemed present in the material. Drying may be performed in one of several manners known per se, such as in an oven, by circulation of heated air, by heat radiation and further by freeze drying. Use of an oven at a temperature below 100°C was found to be adequate.

The processable microporous insulation material has the advantage of being processable into a desired shape with a variety of techniques, including applying on a surface in the form of a paste, extrusion and molding into molded bodies. The technique of molding is deemed highly beneficial, as it allows to obtain bodies that can be easily assembled to an object, such as a cylinder or pipe. Still, the resulting molded bodies will have sufficient flexibility. Drying may be performed during the molding, but also and preferably after application of the molded bodies to the object. The drying after application has the advantage that the molded bodies remain very flexible. Evidently, the humidity level may be tuned during manufacture of the molded bodies so as to be practicable in use. When applied in the form of a paste, it is preferably applied on a foil. Such a foil may afterwards be removed or remain as a protective foil.

An advantage of the processable microporous insulation material is that it may well adhere to any underlying surface. If deemed necessary, dependent on the surface, a primer may be applied, and/or the surface or the molded body may be functionalized with a adhesion promotor. As a consequence, it is not deemed necessary to apply strips around the microporous insulation material, or to use alternative fasteners. Furthermore, as will be apparent, the processable microporous insulation material may be applied in a shape corresponding to the desired object.

These and other objects of the methods and insulation of the present invention will be further elucidated with the following examples. It is observed for sake of clarity that any embodiment and implementation specified hereinabove and/or in the dependent claims applies to any and all of the aspects of the invention, even if not specified so explicitly. When reference is made to composite microporous insulation, this is alternative wording to processable microporous insulation and indicates that the insulation material not just comprises microporous material, but also a complementary shell or carrier material being the gelled material.

### EXAMPLES

### Measurement methods

Thermal conductivity at 10°C is measured using a heatflow meter according to ASTM C518, wherein the lower plate is at 0 °C and the higher plate is at 20°C. Thermal conductivity at 400°C is obtained by extrapolation from the value at 10°C, using a model for the development of thermal conductivity for microporous materials, such as indicated on page 17 of the product brochure "High temperature microporous insulation" of Promat International NV, dated 052014. The relevant graph is that of the Microtherm 1000 Grade.

Shrinkage is defined by weight loss (Wt%), change in length of width (W+L%) and change in thickness (Thx%). The reported change is change after a heat treatment during 12 hours at 600°C. The total shrinkage may be calculated on the basis of a disc-volume on the basis of the changes in length and width (W+L%) and thickness (Thk%) as Δ(πr² x t ) = Δ(π/4d² x t ) = π/4 - [π/4*(1-(W+L))² x (1-Thk)]. Herein r refers to radius, t to thickness, d to the diameter. The W+L and Thx are specified in %.

Density is measured after initial drying of the samples.

### Example 1

Microporous powder mixtures were prepared as specified in Table 1. Use was made of a hydrophobic pyrogenic silica with a surface area of 200 m²/g as commercially available from Evonik under the trade name Aerosil^{™}. The mineral fiber is a silica based fiber comprising 81-94% SiO2 and 6-19% Al2O3 with the remainder being ZrO2 and/or TiO2 and maximum 3% of Na2O and maximum 1.5% of further components, as available from Belchem Fiber Materials, Germany. Its average diameter is 6 µm. The AES Bio soluble fiber is an Alkaline Earth Silicate fiber containing silica as a main component. It is also referred to as a wool, due to its small average diameter (2-3 µm) and consist of a mix of amorphous fibers, which are melted and then rapidly solidified using a combination of silica (SiO2) and calcium oxide (CaO) with or without magnesium oxide (MgO). When inhaled into the human body, it readily dissolves, and hence is referred to as a bio soluble fiber (BSF). Such fibers are for instance produced by Unifrax. Glass fibers were conventional E-glass fibers with a length of 15 mm.

**Table 1 - composition of microporous powder mixtures. Values in weight per cent**

| | M1 | M2 | M3 | M4 |
|---|---|---|---|---|
| Pyrogenic silica | 57% | 57% | 57% | 57% |
| Rutile opacifier | 40% | 35% | 38% | 36% |
| Mineral fiber | 3% | 6% | 5% | 7% |
| AES Bio soluble fiber | 0% | 2% | 0% | 0% |

Gelation mixtures were prepared in accordance with table 2. The mixtures were in powder form. The polyethylene oxide was a water-soluble nonionic polymer with an average molecular mass of 4.0.10⁶, available from Dow Chemicals under the tradename Polyox^{™} WSR-301. The polyacrylic acid was obtained from Celanese under the tradename Elotex^{™} Flex 8320. It is a spray-dried redispersible polymer powder based on acrylic monomers. The methylcellulose is a medium molecular weight (approximate weight 88,000 g/mol) methylcellulose thickener with methoxy substitution between 27.5 and 31.5% by weight as commercially available under the trade name Methocel. The fumed silica is a hydrophilic fumed silica with a surface area of 200 m²/g available from Evonik under the trade name Aerosil^{™} and known for use as a dispersant. The ethylene vinyl acetate was a white powder obtained by spray drying of an aqueous vinyl acetate-ethylene copolymer dispersion commercially obtainable from Dow Chemicals under the trade name DLP212.

**Table 2 - gelation powder mixtures. All values in weight% of the gelation powder mixture**

| | G1 | G2 | G3 | G4 |
|---|---|---|---|---|
| Polyethylene oxide | 31 | 13 | 32 | 31 |
| Polyacrylic acid | 4 | 0 | 0 | 0 |
| Methylcellulose | 15 | 15 | 15 | 15 |
| Fumed silica | 51 | 68 | 53 | 51 |
| Ethylene vinyl acetate | 0 | 4 | 0 | 4 |

Liquid mixtures were prepared in accordance with Table 3. The colloidal silica was a neutral, aqueous dispersion of colloidal silica with approximately 40% solids by weight. The silica dispersion is sterically stabilized and the amorphous silica particles carry a negative surface charge and have been surface modified with an epoxy silane. The silicone binder is a methoxy functional terminated silicone resin emulsion (43% by weight resin content in water) containing methyl phenyl groups commercially available from Wacker under the trade name SILRES^{™} MPF. Water was tap water.

**Table 3 - liquid mixtures, all data as added amounts.**

| | L1 | L2 | L3 | L4 |
|---|---|---|---|---|
| Colloidal silica | 50 | 50 | 90 | 0 |
| Silicone binder | 0 | 0 | 8 | 0 |
| Water | 330 | 660 | 660 | 330 |

Test compositions were prepared on the basis of the microporous mixtures, the gelation mixture and the liquid mixtures as specified hereinabove in Tables 1-3. Thereto the gelation mixture was mixed with the liquid mixture. Thereafter, mixing took place, which resulting in gelation of ingredients to form a gel. The microporous mixture is thereafter added to the gel in the mixer. The entire mixture is then mixed and blended until a homogeneous mixture is obtained. Table 4 shows the compositions 1-6 based on dry weight, wherein the liquid mixture is based on either colloidal silica or water only. Table 5 shows comparative compositions based on dry weight. Gelation phase quality and paste quality were reviewed visually by the formulators.

**Table 4, experiments according to the invention. All data in weight% based on dry weight only. In experiment 3 amount adds up to 80% only.**

| Sample | 1 | 2 | 3 | 4 | 5 | 6 |
|---|---|---|---|---|---|---|
| microporous powder | 72.5% M1 | 72.5% M1 | 72.5% M1 | 72.5% M2 | 72.5% M3 | 72.5% M4 |
| Gelation powder | 7.5% G1 | 7.5% G1 | 7.5% G1 | 7.5% G1 | 7.5% G1 | 7.5% G1 |
| Liquid | 20.0% L1 | 0% L4 | 20.0% L2 | 20.0% L1 | 20.0% L1 | 20.0% L1 |
| Gelation phase quality | + | ++ | + | + | + | + |
| Paste quality | ++ | +++ | +++ | ++ | ++ | ++ |

**Table 5, comparative experiments. All data in weight% based on dry weight only.**

| Sample | C1 | C2 | C3 |
|---|---|---|---|
| microporous powder | 72.5% M1 | 72.5% M1 | 72.5% M1 |
| Gelation powder | 7.5% G2 | 7.2% G3 | 7.5% G4 |
| Liquid | 20% L1 | 20.3% L3 | 20% L1 |
| Gelation phase quality | - | - | - |
| Paste quality | No paste obtained | No paste obtained | No paste obtained |

Characterization tests were performed on the experiments of the invention, forming an appropriate paste. Each time small tiles of 20 x 20 cm were made by casting in a mold, following by drying in an oven at temperature below 100°C for 2-3 hours. After this drying, measurement of density, thermal conductivity was performed. Shrinkage was measured by mass and dimensional determination before and after a 12-hour heat treatment at 600°C. Results are presented in Table 7

**Table 7 - characterization data for the experiments 1-6**

| Sample | 1 | 2 | 3 | 4 | 5 | 6 |
|---|---|---|---|---|---|---|
| Density (g/l) | 410 | 400 | 410 | 386 | 420 | 430 |
| Thermal conductivity at 10°C (mW/m.K) | 25 | 24 | 24 | 30 | 29 | 29 |
| Weight loss (Wt%) | 5.3 | 6.5 | 4.2 | 4.7 | 4.6 | 5.3 |
| Diameter change | 1.5 | 1.0 | 1.2 | 2.3 | 4.6 | 4.5 |
| Thickness change | 0.7 | 1.0 | 0.0 | 0.5 | 0.7 | 1.5 |
| Density after heating (g/l) | 400 | 370 | 400 | 357 | 400 | 410 |

### Review of experiments

Comparison of the experiments with the comparative experiments demonstrates the importance of the formation of a polymer-based hydrogel in the invention. In experiment 1, the gelation mixture G1 was used, comprising both a polyethylene oxide and a polyacrylic acid. Upon addition of water, a gel was formed. Contrarily in comparative experiments C1-C3, gelation mixtures G2, G3 and G5 were used that comprise polyethylene oxide without crosslinker, i.e. polyacrylic acid. The negative result was that no gel formation occurred.

The role of the colloidal silica turns out limited. In experiment 3, the colloidal silica was left out, and just water was added. The result thereof was a good polymer-based hydrogel, into which the microporous powder mixture could be inserted. Comparison with experiment 4 demonstrates that the colloidal silica does not lead to any change in the thermal conductivity. However, the density increases and the weight loss upon heating decreases. Addition of colloidal silica therefore turns out beneficial for the temperature stability of the microporous paste.

Based on these data, it appears that the colloidal silica does not form a gel (i.e. silica gel) by itself. This is deemed positive, as the formation of a silica gel would increase the reaction of the silica gel with the pyrogenic silica in the microporous powder mixture, and hence to deterioration in the thermal conductivity. Additionally, it turns out feasible to use a powder mixture with at least 20% by weight of opacifier, and preferably at least 30% or at least 35%, such as 40%, in microporous powder mixture M1, wherein the preferred opacifier is rutile. This high amount of opacifier is beneficial for the thermal conductivity. The use of more fibers (microporous powder mixture M2) leads to an increased density and a reduced weight loss (see experiment 2), but at the cost of the higher thermal conductivity.

It is observed for sake of clarity, that the formation of a silica gel during drying is not excluded. However, this is after the formation of the paste composition and does not affect the microstructure of the material, and - as apparent from the measurements - does not destabilize the microporous powder within the material.

## Claims

1. Processable microporous insulation material comprising a gelled material in which a microporous powder is loaded, wherein the gelled material is a hydrogel that is based on a polyalkylene oxide, wherein alkylene is C2-C6 alkylene, and wherein the microporous powder comprises 0-10% by weight of inorganic fiber, 20-50% by weight of an opacifier and 30-70% by weight of a particulate silica material from the group of pyrogenic silica and precipitated silica, said particulate silica material optionally further comprising alumina, said weight% based on total dry weight of the microporous powder, wherein said microporous powder and/or at least part of said particulate silica material is hydrophobic.

2. Processable microporous insulation material as claimed in claim 1, wherein the polyalkylene oxide is a polyethylene oxide and/or copolymers thereof.

3. Processable microporous insulation material as claimed in claim 1 or 2, wherein the polyalkylene oxide is crosslinked with a polymeric or oligomeric polyacid.

4. Processable microporous insulation material as claimed in claim 3, wherein the polymeric or oligomeric polyacid is a polyacrylic acid or copolymer thereof.

5. Processable microporous insulation material as claimed in any of the preceding claims, which is free of a silica-gel.

6. Processable microporous insulation material as claimed in claim 1, further comprising a colloidal silica as a filler of the hydrogel.

7. Processable microporous insulation material as claimed in claim 6, wherein the colloidal silica is surface modified, preferably with a silane, such as an epoxy-silane.

8. Processable microporous insulation material as claimed in any of claims 6-7, wherein the colloidal silica is a neutral colloidal silica.

9. Processable microporous insulation material as claimed in any of the preceding claims, wherein said microporous powder comprises a silica-based fiber as the inorganic fiber, preferably with a diameter of at least 5 µm.

10. Processable microporous insulation material as claimed in any of the preceding claims, having a dried density of at least 300 g/l, preferably 350-500 g/l, more preferably 380-450 g/l, said dried density being measured after drying at a temperature below 100°C to a humidity level of 2% or less

11. Processable microporous insulation material as claimed in any of the preceding claims, wherein said microporous powder is present in an amount of at least 60wt%, preferably in the range of 70-80wt% based on the total dry weight of ingredients of the processable insulation material.

12. Method of preparation of a processable microporous insulation material, preferably in accordance with any of the preceding claims, comprising the steps of
- providing a dry mixture of a hydrophilic polymer, a crosslinking polymeric or oligomeric material and preferably an inorganic dispersant;
- adding water or aqueous suspension to generate a hydrogel from the hydrophilic polymer and the crosslinking polymeric or oligomeric material;
- loading a microporous powder into the hydrogel, said microporous powder comprising 0-10% by weight of inorganic fiber, 20-50% by weight of an opacifier and 30-70% by weight of a particulate silica material from the group of pyrogenic silica and precipitated silica, said particulate silica material optionally further comprising alumina, said weight% based on total dry weight of the microporous powder, wherein said microporous powder and/or at least part of said particulate silica material is hydrophobic.

13. Method of manufacturing a body of microporous insulation material, comprising the steps of:
- providing a processable microporous insulation material as claimed in any of the claims 1-11;
- molding the processable microporous insulation material into a molded body of predefined shape, and
- optionally drying the molded body.

14. Method of applying insulation material to a surface, wherein a processable microporous insulation material as claimed in any of the preceding claims 1-11 is applied as the insulation material.

15. The method as claimed in claim 14, wherein the insulation material is used as a jointing material for filling a space between a first and a second surface.
